# EUROPEAN PATENT SPECIFICATION

(11) **EP 1 165 888 B1**
(45) Date of publication and mention of the grant of the patent: **08.06.2005**
(21) Application number: 99941467.5
(22) Date of filing: 21.07.1999
(51) Int. Cl.: D21H 19/38, C09D 5/02

(54) **PAINT AND PAPER COATED WITH SAID PAINT**
FARBE UND DAMIT BESCHICHTETES PAPIER
PEINTURE ET PAPIER RECOUVERT DE CETTE PEINTURE

(30) Priority: 22.07.1998 DE 19832900
(43) Date of publication of application: 02.01.2002
(73) Proprietor: Security Transfer B.V., 8211 AN Lelystad (NL)
(72) Inventor: WILCKE, Michael, F-67150 Erstein (FR)
(74) Representative: Aalbers, Arnt Reinier
(86) International application number: PCT/EP1999/005359
(87) International publication number: WO 2000/005452

(56) References cited:
- EP-A- 0 121 916
- GB-A- 2 114 557
- US-A- 3 945 965

## Description

The invention relates to a spreadable paint, a method of producing the spreadable paint, a coated paper with a coat made from the spreadable paint as well as the use of the coated paper for safeguarding against the forgery of forms.

In practice, primarily to improve the imprintability or printing performance of paper, layers are used as so-called coats which are applied to a paper carrier and which contain mainly coating pigments, adhesives and coating aids. Especially in ink-jet printing, the coat is of ever-increasing importance for the quality of the printed result which can be expected.

The recipe for a known coat is disclosed in the research report of the Papiertechnische Stiftung für Papiererzeugung und Papierverarbeitung (Technical Paper Foundation for Paper Production and Paper Processing), PTS-Research Report 23/97, in PTS Verlag, Munich, under the title: "Verbesserung des Schichtaufbaus und der Grenzflächen gestrichener Ink Jet-Papiere für den Mehrfarbdruck" ("Improvement of coat construction and interfaces of coated ink-jet papers for multiple-color printing"). Here, the coat comprises a pigment mixture with precipitated silicic acid in which the silicic acid has a specific surface area of 650 m²/g. By using precipitated silicic acid with its high specific surface area as compared to uncoated papers, an ink used for printing is already absorbed in the uppermost layer of the coat so that bleeding and deep penetration of the ink into the paper can be prevented.

In some applications, however, other coat characteristics besides an improved print quality are desirable.

The manufacture of apparatuses for optical character recognition (OCR) makes it possible for financial institutions to mechanically read and further process forms filled out by customers. Although this automated data reading enables immense savings in time, the risk of forgery is, however, increased in this way in the sense that even the simplest mechanical tampering carried out with fraudulent intent, such as by erasure, scratching, lifting off of text with adhesive tape and the like are not reliably recognised by the said apparatus during the reading of data, and can lead to intentional erroneous entries. The financial damage caused in this way is considerable and is on the rise.

In order to respond to mechanical manipulations, a paper with a coating would therefore be desirable whose characteristics change upon mechanical tampering carried out with fraudulent intent, but which at the same time satisfies other criteria such as imprintability, writability and intactness under creasing stress.

An object of the invention is therefore to provide a spreadable paint and a coated paper with a coat made from the spreadable paint which is imprintable and writable and which allows the recognition of mechanical tampering in completed forms, wherein at the same time the coat exhibits sufficient adhesion to the paper carrier such that detachment under creasing stress is avoided.

According to the invention, the object is achieved by providing a spreadable dye containing 100 dry parts by weight (pbw) of a pigment mixture, 50 to 100 dry pbw of an adhesive as well as water and known coating aids in normal mixture amounts for these aids, wherein the pigment mixture is made of 25 to 50 wt.% precipitated silicic acid and 75 to 50 wt.% of at least one absorber pigment which absorbs excitation radiation from the ultraviolet or visible region of the spectrum, and wherein the precipitated silicic acid exhibits a specific surface area of 600 m²/g to 700 m²/g, preferably 650 m²/g to 700 m²/g, measured according to BET with N₂ corresponding to DIN 66 131.

According to the invention, the object is further achieved by providing a paper coated with a layer made from the spreadable paint according to the invention, comprising a paper carrier with at least one paper dye which, as a result of being irradiated by excitation radiation which is at least partially absorbed by an absorber pigment in the coat, emits fluorescence.

The coated paper according to the invention is imprintable and writable with various media, in particular laser printers, ink-jet printers and ballpoint pen. In the process of this, there arises a stronger bond between the coat and the printing substance than between the coat and the carrier material so that, upon mechanical application of force intended to scratch off, rub off or rip away the printing substance from the completed form, large areas of the coat detach from the coated paper carrier. In the uncoated areas formed in this way, fluorescence is now inducible, the detection of which enables an identification of tampered forms. Despite the weaker adhesion of the coat to the paper carrier as compared to that of the print substance to the coat, the former is sufficient to avoid detachment of the coat under creasing stress.

Preferably, the spreadable paint according to the invention contains as an adhesive a carboxylated copolymerization of styrene and butadiene as a styrene-butadiene-copolymer, polyvinylalcohol, copolymers of polyvinylacetate, polymaleic acid ester, polyacrylate or mixtures of these compounds.

In an effective further development, the spreadable paint according to the invention contains an adhesive composed of a mixture of essentially equal parts per weight with respect to absolutely dry solid amounts (dry pbw) of polyvinyl alcohol and a non-ionic dispersion of a vinyl acetate-maleic acid ester-copolymer as so-called acrylate dispersion. The use of this adhesive effects a water resistance of the paper layer made from the spreadable paint and consequently allows the printing of paper coated according to the invention by the wet-offset process.

Advisably, the spreadable paint contains at least one cationic polymer which effects improved adhesion of the anionic inks commonly used in the ink-jet printing process.

In a preferred embodiment, the absorber pigment is a substance which absorbs ultraviolet excitation radiation and is preferably composed of titanium dioxide or zinc oxide. In such an advantageous further development, the spreadable paint according to the invention comprises a fluorescence quencher which is implemented to quench residual fluorescence from components in the coat. The fluorescence quencher is preferably a cationically active condensation product of a polyamin with a dicarboxylic acid.

In the procedure to make the spreadable paint according to the invention, 100 dry pbw of a pigment mixture containing 25 to 50 wt.% of a precipitated silicic acid with a surface area of 600 m²/v fo 700 m²/g, preferably 650 m²/g to 700 m²/g, measured according to BET with N₂ corresponding to DIN 66 131 and 75 to 50 wt.% of at least one absorber pigment which absorbs excitation radiation from the ultraviolet or visible region of the spectrum are dispersed, preferably for two and a half hours while stirring, in water with a known dispersion agent in a normal mixture amount for this agent, the pH of this pigment suspension is adjusted to about 8, preferably 8.0, and subsequently 50 to 100 dry pbw of an adhesive (with respect to 100 dry pbw of the pigment mixture) as well as other known coating aids in common mixture amount for these aids are added while stirring.

To produce one of the further developments of the described spreadable paint, the adhesive is stirred in as an aqueous binding solution containing polyvinyl alcohol at a temperature below 30°C followed by an acrylate dispersion in essentially equal dry pbw with respect to the polyvinyl alcohol.

As a paper dye for the paper carrier in the coated paper according to the invention, all paper dyes are employable which possess the characteristic of fluorescing in excitation radiation in the ultraviolet or visible region of the spectrum.

The paper dye of one preferred embodiment is an optical whitener. Optical whiteners have been long employed in the paper industry, for example in the whitening of paper. Here, the deceptive whitening effect arises from the fact that the dyes known as optical whiteners, such as ultramarine, coumarins, benzimidazoles, cyanines, pyrazolines or the like absorb in the UV region and fluoresce in a color complementary to yellow, i.e. bluish. According to the invention, the UV light-absorbing coating prevents the brightening characteristics of these dyes from expressing themselves. Fluorescent light is emitted only when the coating has been damaged and serves, in contrast to its originally conceived purpose, as an indication of mechanical tampering.

It is advisable that the coating of the coated paper according to the invention is coated thick enough on the paper carrier so that, despite the coating, the intensity of the induced fluorescence of at least one paper dye lies below a fixed threshold value.

According to the invention, the coated paper according to the invention is used as printer paper for printing forms which allow a recognition of mechanical tampering.

In addition to fluorescent quenching agents and cationic polymers, the spreadable paint according to the invention can contain disperion agents, defrothing agents, thickening agents and agents for regulating the pH value as coationg aids, wherein the coating aids are used in an amount of up to 12 dry pbw with respect to 100 dry pbw pigment mixture.

The paper carriers used are preferably OCR paper carriers common on the market with optical whiteners fulfilling DIN-Norm 66223 part I. It is advisable that the mass of these OCR papers varies between 80 and 100 g/m².

The specific surface areas provided were determined by the method known in abbreviated form as BET of Brunauer, Emmett and Teller (J. Amer. Doc. 60, 309, 1938).

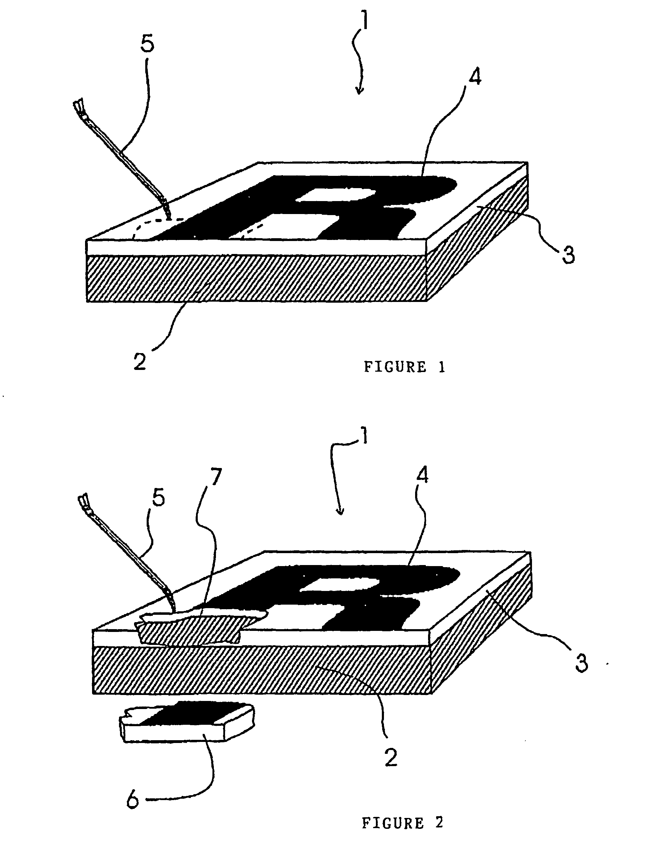

Further advisable embodiments and advantages of the invention are the subject of the following description of embodiment examples of the invention referring to the figure of the drawing.

The figure shows a schematic representation of the effects of an application of mechanical force to an embodiment of the coated paper according to the invention.

The figure shows a schematic representation of the effects of an application of mechanical force to an embodiment of the coated paper 1 according to the invention, which comprises an OCR-paper corresponding to DIN 66223 part I as paper carrier 2 with optical whiteners as paper dyes. A coating 3 is applied to the paper carrier 2 by using a coating method, such as an air knife coating method, long known to the person skilled in the art. The coating 3 contains UV radiation-absorbing titanium dioxide in rutile form as an absorber pigment and a fluorescence quencher to quench residual fluorescence arising in the coating from intense UV-radiation. The coated paper was printed by the laser printing process, in which the fixing on the coating of a thermoplastic toner material 4 as the substance used for printing is effected by heating.

For the mechanical forgery, the surface of the coating is subjected to a strong rubbing force with the help of a scraping tool 5 in order to remove the uppermost layer of the coating, with the toner material 4 clinging to it, from the rest of the coating. According to the present invention, this application of force leads to the detachment of large coat areas 6 from the paper carrier 2 before the toner material 4 can be removed from the coating 3.

The optical whiteners emit fluorescent light upon irradiation with an excitation radiation in the ultraviolet region of the spectrum, the wavelength or wavelength range of which is accordingly between 200 nm and 400 nm. Due to the absorption of the excitation radiation by the absorber pigment and the fluorescence quencher in the coating 3, this fluorescent light is masked. However, if the coating 3 of the coated paper 1 is damaged, the excitation radiation penetrates to the optical whiteners and induces fluorescent light in damaged regions 7, the appearance of which serves as an indication of tampering.

An attempt at forgery therefore leads to the appearance of an ascertainable fluorescence which would otherwise be absent, and according to which the imperfectly coated paper 1 can be detected before its data are read by an optical character recognition (OCR) unit.

Examples of embodiments follow for the spreadable paint according to the invention and for the inventive coated paper as well as comparative examples. As long as not expressly indicated otherwise, the parts by weight and dry parts by weight provided therein are with respect to 100 dry parts by weight pigment mixture.

The coated papers produced by way of example were subsequently subjected to tests in which their imprintability with laser printers and ink-jet printers, their writeability with ballpoint pens common on the market and their ability to withstand creasing stress were evaluated. In addition, tests were performed to tamper mechanically with the paper, in which it was attempted to remove each of the respective substances used for printing by erasure, scratching or by lifting off with adhesive tape. Samples for which a removal of the printing substance was associated with a detachment of the coating were rated as "good". Samples from which the print substance could be removed from the coating were rated as "poor". Finally, the UV-absorption by the coating was checked, those samples for which, despite irradiation with UV light, no fluorescence could be detected being rated as "good".

### Example 1

An aqueous solution of a polymer based on polyacrylic acid commercially available as "Polysalz F" containing 35 percent solids is added at 0.3 dry pbw into 295.5 pbw water as a coating aid and stirred in for one minute. Following this are added 50 dry pbw of a fine grain silicic acid with a BET-surface area of 650 m²/g, commercially available as "Kieselsäure FK 310", following which 50 dry pbw titanium dioxide in rutile form as absorber pigment (trade name "Bayertitan R-KB-2") are stirred in. The pigment suspension obtained in this way is dispersed for at least two and a half hours, following which the pH is adjusted to 8.0 by addition of 0.9 dry pbw of caustic soda with a solid content of 60 percent.

For the production of an adhesive solution, 25 dry pbw polyvinyl alcohol, commercially available as "Moviol 4-88", are mixed into 99 pbw water at a temperature of 95°C. The temperature is held constant for as long as it takes for the polyvinyl alcohol to completely dissolve. After the solution cools down to 50°C, 2.5 dry pbw of a polyvinyl pyrrolodine (trade name "Luviskol K 30") are added as a dispersion agent. After allowing the solution cool, it is of the utmost importance to prevent the formation of a skin on the surface.

The binding agent solution which is not warmer than 30°C is added to the pigment suspension followed by the slow addition with good stirring of 5.0 dry pbw of a cationic vinyl polymer commercially available as "Catiofast CS" with a solid content of 29 percent. Then, 27.5 dry pbw are added of an aqueous nonionic dispersion of a vinyl acetate-maleic acid ester-copolymer with polyvinyl alcohol as a protective colloid, commercially available as "Rhodopas AM 021" and with a solid content of 50 percent.

Finally, there follow the sequential additions of 0.8 dry pbw of a cationically active condensation product of a polyamine with a dicarboxylic acid, commercially available as "Catarex 2L-flüssig" with a solid content of 55%, as a fluorescence quencher as well as 0.5 dry pbw of a defoaming agent, commercially available as "Tebefom 6073", as a further coating aid.

The pigment paint produced in this way exhibits a pronounced tendency to sediment and for this reason must be constantly agitated. The proportion of water in this example embodiment is 72.5 wt% with respect to the total weight of the spreadable paint.

An OCR paper corresponding to DIN 66223 part I with optical whiteners which fluoresce upon UV irradiation was coated with the spreadable paint, whose production is described above, by the air knife method and the paper coated in this way was subsequently subjected as sample 1 to the tests described above.

Sample 1 according to the invention showed a good ability to withstand creasing stress. Even repeated crumpling and creasing of the paper did not lead to any detachment of the coating. Furthermore, the paper met the standards of imprintability in both the laser as well as the ink-jet printing processes and was also easily writable with a ballpoint pen. Further, detachment of large areas of coating was observed in the tests for mechanical tampering, yielding a good result. Since the coating exhibited a high UV absorption, the coated paper is well suited for the previously described use in safeguarding against the forgery of machine-read forms.

### Example 2

A spreadable paint corresponding to the previous example 1 was produced in which the total amount of pigment remained unchanged, but in which the proportion of precipitated silicic acid with respect to the total pigment mixture was 25 wt.%. A paper coated with this spreadable paint was subjected as sample 2 according to the invention to the same tests as above, and exhibited essentially the same characteristics as sample 1.

### Example 3

A spreadable paint corresponding to example 1 was produced with the same total amount of pigment, but the proportion of precipitated silicic acid to the total pigment mixture was 75 wt.%. In performing identical tests on a paper coated with this spreadable paint, the comparative sample 3, which lies outside scope of the invention, yielded good results with respect to imprintability and writability, adhesion of the printing substance to the coating as well as UV absorption. However, the test of the ability of the coating to withstand creasing stress yielded poor results.

### Example 4

A spreadable paint corresponding to the previous example 1 was produced in which the total pigment amount remained the same, but in which the titanium dioxide employed in example 1 was substituted by calcium carbonate in equal dry pbw. Paper coated by the spreadable paint according to example 4 exhibited good imprintability with laser printers as well as with ink-jet printers and was furthermore writable with ball point pen. The coating exhibited the desired characteristics in the attempt to lift off the printing substance with adhesive tape. However, with erasure or scratching, only satisfactory results were observed. As expected, UV-radiation was not absorbed by the coating, so that the fluorescence of the optical whitener of the coated paper carrier was visible. The coated paper is hence not suited for use according to the invention. In contrast, the test of the ability to withstand creasing stress yielded good results.

### Example 5

A spreadable paint was produced according to example 4 in which equal dry pbw of commercially common Kaolin was employed in place of calcium carbonate. In testing, a paper coated with the spreadable paint (comparative example 5) yielded results corresponding to the previous example with the difference that in the lifting off of the printing substance with adhesive tape the result was also only satisfactory. The lack of UV absorption by the coating renders comparative sample 5 unsuitable for the detection of attempts at mechanical tampering.

### Example 6

A spreadable paint according to example 1 was produced in which the total pigment content remained unchanged, but in which the silicic acid employed in example 1 with a specific surface area of 650 m²/g (BET; N₂) was substituted by a precipitated silicic acid of specific surface area 700 m²/g (BET; N₂) in indentical dry pbw. The paper coated with this spreadable paint yielded as sample 6 according to the invention the same positive test results as sample 1.

### Example 7

A spreadable paint was produced according to example 1 in which the precipitated silicic acid was substituted by precipitated silicic acid of specific surface area 500 m²/g (BET; N₂). Testing of paper coated with this spreadable paint as comparative example 7 outside the scope of the invention yielded a good imprintability in ink-jet as well as in laser jet printing processes and furthermore exhibited good writability with ball point pen. However, the characteristics of the coating with respect to lifting off with adhesive tape were only satisfactory for the comparative example 7 printed with a laser printer. The other tests of printing substance adhesion yielded good results. The coating exhibited good UV absorption as well. The test for ability to withstand creasing stress, however, yielded poor results, limiting the use of comparative example 7 in practice.

## Claims

1. A spreadable paint comprising 100 dry parts by weight of a pigment mixture, 50 to 100 dry parts by weight of an adhesive as well as water and known coating aids in mixture amounts normal for these agents, wherein the pigment mixture contains 25 to 50 wt.% precipitated silicic acid and 75 to 50 wt.% of at least one absorber pigment which absorbs excitation radiation from the ultraviolet or visible region of the spectrum, and wherein the precipitated silicic acid has a specific surface area of 600 m²/g to 700 m²/g, preferably 650 m²/g to 700 m²/g, measured according to BET with N₂ corresponding to DIN 66 131.

2. The spreadable paint as defined in claim 1, **characterized in that** a carboxylated polymerization mixture of styrene and butadiene as styrene-butadiene-copolymer, polyvinyl alcohol, copolymers of polyvinyl acetate, polymaleic acid ester, polyacrylate or mixtures of these compounds are used as the adhesive.

3. The spreadable paint as defined in claim 2, **characterized in that** the adhesive contains polyvinyl alcohol and a nonionic dispersion of a vinyl acetate-maleic acid ester-copolymer and an acrylate dispersion in essentially identical dry parts by weight.

4. The spreadable paint as defined in any of claims 1 to 3, **characterized in that** the coating aids comprise at least one cationic polymer.

5. The spreadable paint as defined in any of claims 1 to 4, **characterized in that** the absorber pigment is a substance which absorbs ultraviolet excitation radiation.

6. The spreadable paint as defined in claim 5, **characterized in that** the absorber pigment is composed of titanium dioxide or zinc oxide.

7. The spreadable paint as defined in claim 5 or 6, **characterized in that** a fluorescence quencher is provided to quench fluorescence of components of the coating.

8. The spreadable paint as defined in claim 7, **characterized in that** the fluorescence quencher is a condensation product of a polyamine with a dicarboxylic acid.

9. A method of producing a spreadable paint as defined in claim 1, **characterized in that** 100 dry parts by weight of a pigment mixture containing 25 to 50 wt.% of a precipitated silicic acid of 600 m²/g to 700 m²/g, preferably 650 m²/g to 700 m²/g, surface area measured according to BET with N₂ corresponding to DIN 66 131 and 75 to 50 wt.% of at least one absorber pigment which absorbs excitation radiation from the ultraviolet or visible region of the spectrum are dispersed into water with a known dispersion agent in a common mixture amount for this agent, the pH of this pigment suspension is adjusted about 8 and subsequently an adhesive is added with stirring at 50 to 100 dry parts by weight with respect to 100 dry parts by weight of the pigment mixture as well as further known coating aids in normal mixing amounts for these aids.

10. The method of claim 9 for the production of a spreadable paint according to claim 3, **characterized in that** the adhesive is added with stirring as an adhesive solution containing aqueous polyvinyl alcohol at a temperature below 30°C followed by the addition while stirring of an aqueous nonionic dispersion of a vinyl acetate/maleic acid ester copolymer as an acrylate dispersion in essentially equal dry parts by weight to the polyvinyl alcohol.

11. A coated paper with a coating (3) made from one of spreadable paints according to one of the claims 1 to 8, comprising a paper carrier (2) with at least one paper dye, which emits fluorescence as a result of being irradiated with an excitation radiation, which itself is at least partially absorbed by an absorber pigment of the coating (3).

12. The coated paper as defined in claim 11, **characterized in that** the paper dye(s) is an optical whitener(s).

13. The coated paper as defined in claim 11 or 12, **characterized in that** the coating (3) is coated in such a thickness on the paper carrier (2) that the intensity of the emitted fluorescence despite the coating (3) is below a determined threshhold value.

14. Use of a coated paper according to any one of claims 11-13 as printer paper for the printing of forms which allow the recognition of mechanical tampering.

## Patentansprüche

1. Streichfarbe, umfassend 100 Trockengewichtsteile eines Pigmentgemisches, 50 bis 100 Trockengewichtsteile eines Haftmittels sowie Wasser und bekannte Streichhilfsmittel in für diese Mittel üblicher Gemischmenge, wobei das Pigmentgemisch 25 bis 50 Gew.-% aus gefällter Kieselsäure und 75 bis 50 Gew.-% aus mindestens einem Anregungsstrahlung aus dem ultravioletten oder sichtbaren Spektralbereich absorbierenden Absorberpigment enthält, und wobei die gefällte Kieselsäure eine nach BET mit N₂ entsprechend DIN 66 131 gemessene spezifische Oberfläche von 600 m²/g bis 700 m²/g, bevorzugt 650 m²/g bis 700 m²/g aufweist.

2. Streichfarbe gemäß Anspruch 1, **dadurch gekennzeichnet, daß** als Haftmittel ein carboxyliertes Mischpolymerisat von Styrol und Butdien als Styrol-Butadien-Copolymer, Polyvinylalkohol, Copolymere des Polyvinylacetats, Polymaleinsäureesters, Polyacrylats oder Gemische dieser Verbindungen verwendet werden.

3. Streichfarbe gemäß Anspruch 2, **dadurch gekennzeichnet, daß** das Haftmittel Polyvinylalkohol und eine nicht-ionische Dispersion eines Vinylacetat-Maleinsäureester-Copolymers und eine Acrylatdispersion in im Wesentlichen gleichen Trockengewichtsteilen enthält.

4. Streichfarbe gemäß einem der Ansprüche 1 bis 3, **dadurch gekennzeichnet, daß** die Streichhilfsmittel mindestens ein kationisches Polymer umfassen.

5. Streichfarbe gemäß einem der Ansprüche 1 bis 4, **dadurch gekennzeichnet, daß** das Absorberpigment eine eine ultraviolette Anregungsstrahlung absorbierende Substanz ist.

6. Streichfarbe gemäß Anspruch 5, **dadurch gekennzeichnet, daß** das Absorberpigment aus Titandioxid oder Zinkoxid besteht.

7. Streichfarbe gemäß Anspruch 5 oder 6, **dadurch gekennzeichnet, daß** ein Fluoreszenzlöscher zum Löschen einer Fluoreszenz von Beschichtungsbestandteilen vorgesehen ist.

8. Streichfarbe gemäß Anspruch 7, **dadurch gekennzeichnet, daß** der Fluoreszenzlöscher ein Kondensationsprodukt eines Polyamins mit einer Dicarbonsäure ist.

9. Verfahren zur Herstellung einer Streichfarbe gemäß Anspruch 1, **dadurch gekennzeichnet, daß** 100 Trockengewichtsteile eines Pigmentgemisches enthaltend 25 bis 50 Gew.-% einer gefällten Kieselsäure mit einer nach BET mit N₂ entsprechend DIN 66 131 gemessenen Oberfläche von 600 m²/g bis 700 m²/g, bevorzugt 650 m²/g bis 700 m²/g und 75 bis 50 Gew.-% mindestens eines Anregungsstrahlung aus dem ultravioletten oder sichtbaren Spektralbereich absorbierenden Absorberpigments, in Wasser mit einem bekannten Dispersionsmittel in einer für dieses Mittel üblichen Gemischmenge dispergiert wird, der pH-Wert dieser Pigmentsuspension auf 8 eingestellt und nachfolgend 50 bis 100 Trockengewichtsteile eines Haftmittels, bezogen auf 100 Trockengewichtsteile des Pigmentgemisches sowie weitere bekannte Streichhilfsmittel in für diese Hilfsmittel üblicher Gemischmenge unter Rühren zugegeben werden.

10. Verfahren gemäß Anspruch 9 zur Herstellung einer Streichfarbe gemäß Anspruch 3, **dadurch gekennzeichnet, daß** das Haftmittel als wäßrige Polyvinylalkohol enthaltende Haftmittellösung bei einer Temperatur unterhalb 30°C und anschließend eine wäßrige nicht-ionische Dispersion eines Vinylacetat/Maleinsäureester-Copolymers als Acrylatdispersion zu im Wesentlichen gleichen Trockengewichtsteilen zu dem Polyvinylalkohol unter Rühren zugegeben werden.

11. Gestrichenes Papier mit einer aus einer der Streichfarben nach einem der Ansprüche 1 bis 8 gebildeten Beschichtung (3), umfassend einen Papierträger (2) mit mindestens einem Papierfarbstoff, der in Folge einer Bestrahlung mit einer Anregungsstrahlung, welche mindestens teilweise durch ein Absorberpigment der Beschichtung (3) absorbiert wird, Fluoreszenzstrahlung erzeugt.

12. Gestrichenes Papier gemäß Anspruch 11, **dadurch gekennzeichnet, daß** der oder die Papierfarbstoff(e) ein optischer Aufheller sind.

13. Gestrichenes Papier gemäß Anspruch 11 oder 12, **dadurch gekennzeichnet, daß** die Beschichtung (3) derart dick auf den Papierträger (2) aufgetragen ist, daß die Fluoreszenzstrahlungsintensität trotz der Beschichtung (3) einen festgelegten Schwellenwert unterschreitet.

14. Verwendung eines gestrichenen Papiers gemäß einem der Ansprüche 11 bis 13 als Druckpapier zum Druck von Formularen, die eine Erkennung mechanischer Manipulationen erlauben.

## Revendications

1. Peinture pouvant être étalée comprenant 100 parties en poids à sec d'un mélange de pigments, 50 à 100 parties en poids à sec d'un adhésif de même que de l'eau et des agents d'aide au revêtement connus dans des proportions de mélange normales pour ces agents, où le mélange de pigments contient 25 à 50 % en poids d'acide silicique précipité avec 75 à 50 % en poids d'au moins un pigment absorbant qui absorbe le rayonnement d'excitation provenant de la région des ultraviolets ou visible du spectre, et où l'acide silicique précipité présente une surface spécifique de 600 m²/g à 700 m²/g, de préférence 650 m²/g à 700 m²/g, mesurée selon la méthode BET avec N₂ qui correspond à la norme DIN 66 131.

2. Peinture pouvant être étalée selon la revendication 1, **caractérisée en ce qu'**un mélange de polymérisation carboxylé de styrène et de butadiène sous la forme d'un copolymère styrène-butadiène, d'un alcool polyvinylique, de copolymères de polyacétate de vinyle, d'ester d'acide polymaléique, de polyacrylate ou de mélanges de ces composés sont utilisés comme adhésif.

3. Peinture pouvant être étalée selon la revendication 2, **caractérisée en ce que** l'adhésif contient de l'alcool polyvinylique et une dispersion non ionique d'un copolymère d'acétate de vinyle - ester d'acide maléique et d'une dispersion d'acrylate en parties en poids à sec pratiquement identiques.

4. Peinture pouvant être étalée selon l'une quelconque des revendications 1 à 3, **caractérisée en ce que** les agents d'aide au revêtement comprennent au moins un polymère cationique.

5. Peinture pouvant être étalée selon l'une quelconque des revendications 1 à 4, **caractérisée en ce que** le pigment absorbant est une substance qui absorbe le rayonnement d'excitation ultraviolet.

6. Peinture pouvant être étalée selon la revendication 5, **caractérisée en ce que** le pigment absorbant est composé de dioxyde de titane et d'oxyde de zinc.

7. Peinture pouvant être étalée selon la revendication 5 ou 6, **caractérisée en ce qu'**un agent d'étouffement de la fluorescence est prévu pour étouffer la fluorescence des composants du revêtement.

8. Peinture pouvant être étalée selon la revendication 7, **caractérisée en ce que** l'agent d'étouffement de la fluorescence est un produit de condensation d'une polyamine avec un acide dicarboxylique.

9. Procédé de fabrication d'une peinture pouvant être étalée selon la revendication 1, **caractérisé en ce que** 100 parties en poids à sec d'un mélange de pigments contenant 25 à 50 % en poids d'acide silicique précipité à surface spécifique de 600 m²/g à 700 m²/g, de préférence de 650 m²/g à 700 m²/g, mesurée conformément à la méthode BET avec N₂, correspondant à la norme DIN 66 131, et 75 à 50 % en poids d'au moins un pigment absorbant qui absorbe un rayonnement d'excitation provenant de la région de l'ultraviolet ou visible du spectre, sont dispersées dans de l'eau avec un agent de dispersion connu en une proportion de mélange usuelle pour cet agent, le pH de cette suspension de pigment est ajusté à environ 8 et ensuite un adhésif est ajouté avec agitation à 50 à 100 parties en poids à sec par rapport à 100 parties en poids à sec du mélange de pigments de même que d'autres agents d'aide au revêtement connus en des proportions de mélange normales pour ces agents d'aide.

10. Procédé de fabrication selon la revendication 9, d'une peinture pouvant être étalée conformément à la revendication 3, **caractérisé en ce que** l'adhésif est ajouté avec agitation sous la forme d'une solution adhésive contenant de l'alcool polyvinylique aqueux à une température en dessous de 30 °C suivie par l'ajout sous agitation d'une dispersion non ionique aqueuse d'un copolymère d'acétate de vinyle/ester d'acide maléique sous la forme d'une dispersion d'acrylate selon des parties en poids à sec pratiquement égales à l'alcool polyvinylique.

11. Papier revêtu d'un revêtement (3) réalisé à partir de peintures pouvant être étalées selon l'une des revendications 1 à 8, comprenant un support de papier (2) avec au moins un colorant de papier, qui émet de la fluorescence à la suite d'une illumination par un rayonnement d'excitation, qui lui-même est au moins partiellement absorbé par un pigment absorbant du revêtement (3).

12. Papier revêtu selon la revendication 11, **caractérisé en ce que** le colorant ou les colorants de papier est/sont un ou des agents de blanchiment optique(s).

13. Papier revêtu selon la revendication 11 ou 12, **caractérisé en ce que** le revêtement (3) est enduit sur une épaisseur sur le support de papier (2) telle que l'intensité de la fluorescence émise en dépit du revêtement (3) est en dessous d'une valeur de seuil prédéterminée.

14. Utilisation d'un papier revêtu selon l'une quelconque des revendications 1 à 13, en tant que papier d'impression pour l'impression de formulaires qui permettent la reconnaissance d'une falsification mécanique.
